# EUROPEAN PATENT SPECIFICATION

(11) **EP 1 908 935 B1**
(45) Date of publication and mention of the grant of the patent: **29.10.2014**
(21) Application number: 08001389.9
(22) Date of filing: 14.12.2006
(51) Int. Cl.: F01N 3/28

(54) **Method for manufacturing a holding seal member for exhaust gas purifying body**
Verfahren zur Herstellung eines Halte- und Dichtelements für einen Abgasreinigungskörper
Procédé de fabrication d'un élément de retenue et d'étanchéité pour organe de purification de gaz d'échappement

(30) Priority: 28.12.2005 JP 2005379936
(43) Date of publication of application: 09.04.2008
(62) Divisional of application: 06025959.5
(73) Proprietor: Ibiden Co., Ltd., Gifu 503-8604 (JP)
(72) Inventor: Saiki, Kenzo, Takahama-shi, Aichi 441-1301 (JP)
(74) Representative: HOFFMANN EITLE

(56) References cited:
- EP-A1- 1 329 601
- EP-A1- 1 334 795
- EP-A1- 1 486 255
- EP-A1- 1 495 807
- EP-A1- 1 538 309
- GB-A- 2 138 032
- JP-A- 2002 221 032
- JP-A- 2002 349 256
- US-A- 5 755 025
- US-A1- 2003 000 089
- US-A1- 2004 265 516

## Description

The present invention relates to a method for manufacturing a holding seal member for an exhaust gas purifying body and a method for manufacturing an exhaust gas purifier.

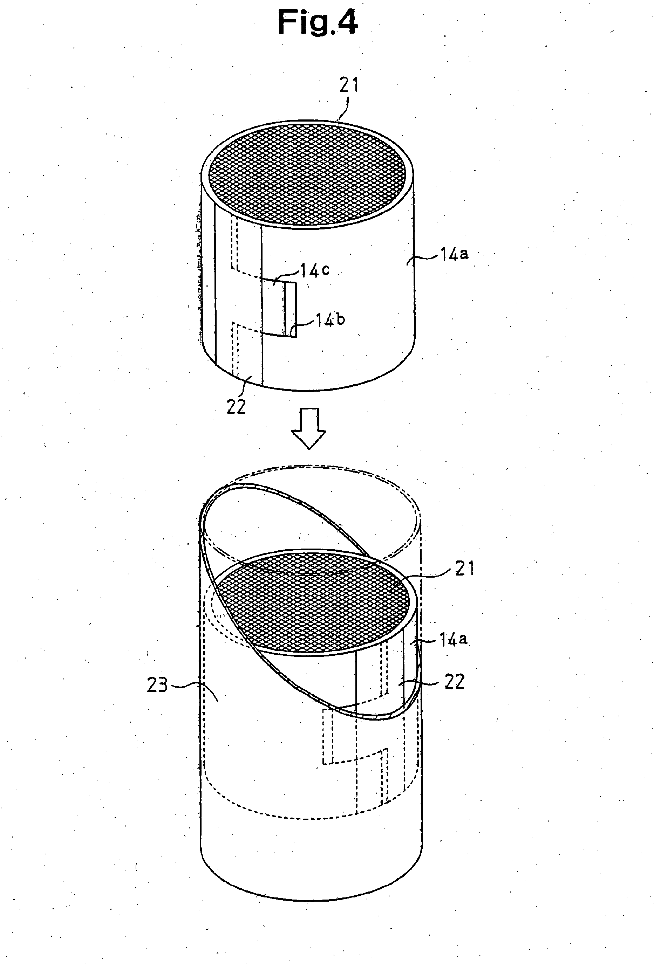

An exhaust gas purifier is generally attached to an exhaust pipe of a vehicle. As shown in Fig. 4, the exhaust gas purifier includes a shell 23, and an exhaust gas purifying body 21. The purifying body 21 is accommodated in the shell 23 to purify exhaust gas. A holding seal member 14a seals the gap between the shell 23 and the exhaust gas purifying body 21, prevents displacement of the exhaust gas purifying body, and absorbs vibrations. JP-A-2002-349256 discloses a holding seal member of the prior art. The holding seal member is cut into a predetermined shape from a resilient inorganic fiber mat. The holding seal member is cut into a predetermined shape, wrapped around the exhaust gas purifying body, and accommodated in a metal tubular shell with the exhaust gas purifying body.

There has been an increase in the types of exhaust gas processing systems. This has resulted in an increase in the types of exhaust gas purifying filters, such as diesel particulate filter (DPF), and catalyst carriers carrying catalysts for purifying exhaust gas. Thus, there is a necessity of identifying holding seal members using product names and serial numbers.

US-A-2003/0000089 discloses an assembling method for an assembly in which a cell structure is housed and held in a metal vessel via a compressible material by arranging the compressible material having a cushioning property between the outer periphery of the cell structure and the tubular metal vessel in a compressed state and a applying a mounting pressure to the cell structure via the compressible material to hold the cell structure in the metal vessel. Information regarding the thickness and/or bulk density of the compressible material has been marked on the member surface prior to the start of an assembling process, the information is read in the assembling process, and a cell structure, a metal vessel, and a compressible material having a proper holding condition are selected based on the read information.

EP-A-1 329 601 discloses a holding and sealing material for a catalytic converter which is disposed between a cylindrical catalyst carrier and a metal shell covering the outer periphery of the catalyst carrier. The holding and sealing material comprises a fiber aggregate mainly comprised of alumina-silica based ceramic fibers having a mullite crystal content of 10 wt% or less, and the fiber aggregate is subjected to a needle punch treatment. The fiber aggregate subjected to the needle punch treatment is baked. After the baking step, the holding and sealing material may be impregnated with an organic binder.

The present invention provides a method for manufacturing a holding seal member that is easy to identify.

According to an embodiment of the present disclosure, there is provided a sheet-like inorganic fiber holding seal member to be wrapped around an exhaust gas purifying body for holding the exhaust gas purifying body and preventing leakage of exhaust gas. The holding seal member is characterized by identification information applied on a surface of the inorganic fiber holding seal member.

The identification information is visually appeared on the surface of the inorganic fiber mat. Therefore, product name, the inner and outer sides of the holding seal member will not be mistaken.

In an embodiment of the present disclosure, the holding seal member is one of a plurality of holding seal members cut out from an inorganic fiber sheet, and the identification information is a printed information printed by a printer on each holding seal member before the holding seal members are cut out from the inorganic fiber sheet.

The method of the invention has the features of claim 1.

In a preferred embodiment of the present invention, the printer is a device selected from the group consisting of a non-contact type printing device including a liquid ejection head for ejecting liquid, a transfer roller device, and a flat plate type pressing transfer device.

In a preferred embodiment of the present invention, the holding seal member is formed from an inorganic fiber sheet impregnated with at least either one of an organic binder and an inorganic binder.

In a preferred embodiment of the present invention, the amount of the organic binder impregnated in the holding seal member is 1 to 10% by mass with respect to the mass of the holding seal member.

In a preferred embodiment of the present invention, the inorganic fiber has an average fiber diameter of 6 µm or greater.

In a preferred embodiment of the present invention, the holding seal member is formed from an alumina-silica fiber sheet.

In a preferred embodiment of the present invention, the identification information is at least one of a product name, a product number, a manufacturing serial number, basic weight, product class, weight, product size, vehicle type information, and inner or outer side distinguishing mark of the holding seal member.

According to the present invention, there is also provided a method for manufacturing an exhaust gas purifier having the features of claim 8. An exhaust gas purifying body includes a circumferential surface in which the holding seal member at least partially wraps around the circumferential surface. A tubular shell accommodates the seal member and the exhaust gas purifying body. The holding seal member has a surface including identification information.

In a preferred embodiment of the present invention, the exhaust gas purifying body is a catalyst carrier carrying a catalyst for purifying exhaust gas or an exhaust gas purifying filter.

According to an embodiment of the present disclosure, there is provided a method for forming a holding seal member for an exhaust gas purifying body which includes preparing an inorganic fiber mat, relatively moving the inorganic fiber mat and a liquid ejection head of a liquid ejection device, and printing identification information on the surface of the inorganic fiber mat by ejecting liquid from the liquid ejection head.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a plan view showing relative movement of a holding seal member according to a preferred embodiment of the present invention and a liquid ejection device in the X-axis direction;
Fig. 2 is a plan view showing relative movement of the holding seal member and the liquid ejection device of Fig. 1 in the Y-axis direction;
Fig. 3 is a front view showing the holding seal member and a printing apparatus;
Fig. 4 is a perspective view showing an exhaust gas purifying body and the holding seal member accommodated in a shell; and
Fig. 5 is a graph showing the results of an ink absorption test.

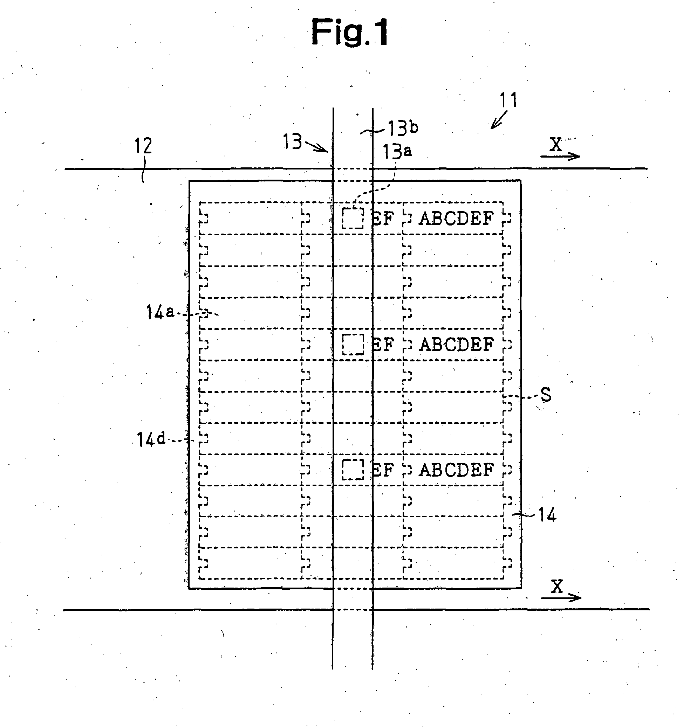

A holding seal member for an exhaust gas purifying body according to a preferred embodiment of the present invention will now be discussed with reference to Figs. 1 to 4.

A holding seal member 14a has a surface on which predetermined identification information, such as a manufacturing serial number, is printed by a holding seal member printing apparatus 11. The holding seal member 14a is cut out from an inorganic fiber mat 14. The printing apparatus 11 prints the identification information on the inorganic fiber mat 14 before the holding seal member 14a is cut out. Therefore, the printing subject is the inorganic fiber mat 14. The printing apparatus 11 includes an ink jet printing device, or liquid ejection device 13, for printing the identification information on the inorganic fiber mat 14 by ejecting an ink composition 15 in the form of liquid droplets or atomized liquid from a position distant from the inorganic fiber mat 14.

Referring to Fig. 1, a flat rectangular inorganic sheet having an even thickness is cut to form the inorganic fiber mat 14 with a predetermined width. The inorganic fiber mat 14 is preferably formed by a felt or non-woven cloth having a constant resilience and thickness. Examples of the fiber material contained in the inorganic fiber mat 14 include ceramic fibers, such as alumina fibers, alumina-silica fibers, silica fibers, and glass fibers. The preferred fiber material is alumina-silica fibers having superior heat resistance, wind corrosion resistance, and surface pressure holding characteristics at high temperatures.

The method for manufacturing the inorganic fiber is not particularly limited. In one example, short fibers of about 0.5 to 10 mm are collected, fibrillated, and stacked or dispersed in water to prepare fiber dispersed liquid. The fiber dispersed liquid is poured into a mold and dried in a pressurized state to form a fiber aggregate (fiber mat). The thickness of the fiber aggregate is appropriately set in accordance with the type of inorganic fiber mat 14 that is formed, the type of exhaust gas purifying body to which the inorganic fiber mat 14 will be used for, and the bulk density. The fiber aggregate undergoes a needle punching (needling) process. The needle punching process is performed to thin the stacked sheet so as to facilitate handling and to strengthen the engagement of the fibers between the stacked sheets. The needle punching process is preferably performed by punching a needle in a direction orthogonal to the layer, in particular, by quantitatively punching the needle in constant intervals. This intertwines fibers in a complicated manner between the layers of the stacked sheets and thus strengthens the bonding of the layers.

A binder is impregnated in the inorganic fiber mat 14 before the cutting and molding so that the inorganic fiber mat 14 has a predetermined thickness, resilience, and air tightness. This prevents scattering of fibers and facilitates handling during attachment to an exhaust pipe. For example, the inorganic fiber mat 14 may be immersed in a liquid of binder. Examples of the binder include inorganic binders and organic binders. However, organic binders are preferable since characters may be printed clearly with ink. Inorganic binders include clay minerals such as montmorilonite, water glass, synthetic mica, montmorillonite, colloidal alumina, and colloidal silica. Examples of organic binders include water soluble resins, such as acrylic resin and polyvinyl alcohol, and latex, such as acrylic rubber, nitrile rubber, acrylonitrile-butadiene rubber (NBR), and stylene-butadiene rubber (SBR). The binders may be used alone or by in combination.

The organic binder absorption ratio of the following equation is used to express the amount of organic binder impregnated in the fiber stacked sheet.

Organic binder absorption ratio (mass %) = 100x(dried mass of organic binder impregnated in fiber stacked sheet)/(mass of holding seal member)

The organic binder absorption ratio is preferably greater than 0% by mass and 12% by mass or less, more preferably 0.5 to 10% by mass, and most preferably 1.0 to 10% by mass with respect to the mass of the holding seal member. If an organic binder is not used, the wetness of the ink may be too high and cause the ink applied to the inorganic fiber mat 14 to be blotted. As a result, the printed characters would not be clear. If the organic binder absorption ratio exceeds 12% by mass, the ink would lack wetness and result in insufficient adhesion between the applied ink and the fiber of the inorganic fiber mat 14. As a result, the printed characters would not be clear.

The amount of organic binder absorbed in the fiber sheet may be measured by performing an ignition loss test. The ignition loss test will now be described. First, the weight (A) of a magnetic plate is measured. A fiber mat, which has absorbed the binder, is placed in the magnetic plate and dried at 110°C for 60 minutes. Then, the weight (B1) of the magnetic plate is measured. The weight B1 is the total weight of the fiber mat, the magnetic plate, and the dried binder. The, the magnetic plate containing the fiber mat undergoes heat treatment performed under the conditions of 600°C and 60 minutes. The magnetic plate containing the fiber mat is then naturally cooled and dried under the conditions of 110°C and 60 minutes. Afterwards, the weight (B2) is measured. The weight B2 is the total weight of the fiber mat and the magnetic plate.

The amount of weight reduction is theoretically equal to the weight of the dried binder, and is calculated from the expression of initial mat weight (B1-A) - heated mat weight (B2-A). The heating loss ratio of the following equation is used as an index for the absorbed amount of organic binder.

Heating loss ratio(%) = (amount of weight reduction/initial mat weight)x100

The average fiber diameter of the fiber material is appropriately set in accordance with the type of holding seal member. Preferably, the average fiber diameter is relatively wide (6 µm or greater) so that clear printing is realized without drastically lowering the adhesive property of the ink even if the organic binder absorption ratio is increased. If the average fiber diameter is less than 6 µm, the adhesive property of the ink lowers and the printed character may become unclear. Furthermore, the scattering of the inorganic fiber from the holding seal member 14a may not be sufficiently suppressed. When forming a fiber mat having a fiber diameter of 6 µm or greater, among the ceramic fibers mentioned above, alumina fibers are preferable in terms of easy formation.

The average fiber diameter is measured in the following manner. First, a fiber material sample is pressurized (e.g., 20.6 MPa) and crushed. Next, the sample is sifted and homogenized and then adhered to an electron microscope sample stage using a holding strip such as double-faced adhesive tape or the like. Then, gold, platinum, and carbon are vapor deposited on the surface of the fibers adhered to the sample stage to produce a test body. The test body is then photographed under a predetermined magnification (e.g., 1500 x) using the electron microscope, and the diameters of the fibers are read from the picture (measurement up to 0.1 µm is possible in 1500 x measurement). The average fiber diameter is then obtained from a frequency distribution table of the measured fiber diameters and the number of fibers.

The inorganic fiber mat 14 is arranged at a cut-out position S, and then cut using a punching blade to manufacture a plurality of holding seal members 14a having a predetermined shape. A tongue 14c and a tongue holder 14b for receiving at least one part of the tongue 14c are formed on opposite ends of each holding seal member 14a in the lateral direction. As shown in Fig. 4, at least part of the tongue 14c is received in and contacted with the tongue holder 14b when the holding seal member 14a is wrapped around the exhaust gas purifying body 21. This prevents a linear gap extending in the axial direction of the shell 23 from forming. Thus, leakage of the exhaust gas is prevented. Furthermore, the tolerable circumferential dimension of the exhaust gas purifying body 21 that can be wrapped by the holding seal member 14 increases by an amount corresponding to the dimension of the tongue 14c and the tongue holder 14b.

The direction for cutting of the inorganic fiber mat 14 is not particularly limited. Examples of tools for cutting the inorganic fiber mat 14 include scissors, a cutter, and punching blade formed by bending a strip of metal plate. A punching blade made from carbon copper is preferable in consideration of the thickness, hardness, and productivity of the inorganic fiber mat. Rims 14d and the holding seal members 14a (in Fig. 1, 12 rows and 3 columns = 36 pieces) are cut out from each sheet of the inorganic fiber mat 14 with the punching blade. The printing apparatus 11 performs printing on the inorganic fiber mat 14 at a printing position corresponding to the expected cutting position of each holding seal member 14a.

The printing apparatus 11 includes a conveying table 12 and a liquid ejection device 13. The conveying table 12 is movable in forward and rearward directions (toward the left and right as viewed in Figs. 1 to 3). The liquid ejection device 13, which functions as a printing means, is arranged distant from the conveying table 12 and ejects the ink composition 15 on a printing subject.

A driving means (not shown) moves the conveying table 12 in the forward and rearward direction, or in the X direction, at a predetermined movement speed. The conveying table 12 may have a surface formed by a resin plate, a rubber plate, a foam body, or a stacked plate including or coated by fiber layers of non-woven cloth or felt etc. However, the conveying table 12 is not limited in such a manner and may be formed from any material as long as the inorganic fiber mat 14 can be held in a parallel state and the held object does not easily move and is not easily damaged by vibrations during conveyance. The drive of the conveying table 12 is controlled by a control device (not shown). Printing on the surface of the inorganic fiber mat 14 is performed by controlling the movement speed of the conveying table 12 and the ejection of the ink composition 15 from the liquid ejection device 13 in a cooperative manner. The feeding speed of the conveying table 12 during printing is appropriately set in accordance with the quality (e.g., clearness) of the printed characters and the productivity.

The liquid ejection device 13 is an ink jet printing device for printing the identification information by ejecting the ink composition 15 as liquid droplets or atomized liquid from a position distant from the inorganic fiber mat 14, which is the printing subject. The liquid ejection device 13 includes a liquid ejection head 13a, which ejects the ink composition 15 to the inorganic fiber mat 14, and a support 13b, which supports the liquid ejection head 13a. The support 13b, which spans over the conveying table 12 in the widthwise direction, is moved by a driving means (not shown) in the vertical direction (left and right directions with respect to the conveying direction). The liquid ejection head 13a ejects ink particles in accordance with an image signal or character signal provided from the control device. The printing control with respect to the inorganic fiber mat 14 includes the movement control such as forward or rearward movement of the conveying table 12 and the emission control of the ink composition 15. The size (dots) of the ink particles ejected from the liquid ejection head 13a during printing is appropriately set taking into consideration the quality (e.g., contrast ratio) of the printed character and the productivity.

Three liquid ejection heads 13a are embedded at equal intervals in the longitudinal direction with an ejector for the ink composition 15 facing outward from the lower surface of the support 13b. The method for ejecting the ink composition 15 from the liquid ejection head 13a is not particularly limited and is appropriately set in accordance with the type and the printing pattern of the inorganic fiber mat 14. For example, the ink composition 15 may be ejected by a piezoelectric element of which volume varies when voltage is applied or by using the pressure generated by bubbles formed by heating the ink composition 15. However, the method using the piezoelectric element is preferred since degeneration of the ink composition 15 is small as heat is not used, and clogging of the head is less likely to occur.

The ink composition 15 is not particularly limited and a known ink composition containing a dye and pigment is used. The ink composition 15 contains water and organic solvent serving as solvent in addition to the dye and pigment. The organic solvent may be polyalkylene glycol type such as polyethylene glycol, alkylene glycol type such as propylene glycol, and pyrrolidone type such as glycerin, alcohol type. The pigment may be, for example, water soluble dye such as a direct dye, acid dye, and basic dye. Sedimentation of the dye component is less likely to occur by using the dye dissolved in liquid such as water or organic solvent.

The pigment may be an organic pigment or an inorganic pigment. The organic pigment may be, for example, an azo pigment such as azolake, condensed azo, and chelate azo, a polycyclic pigment, such as quinacridone, phtalocyanine, anthraquinone, dioxiazine, thioindigo, and isoindolynone, chinophtalone, a nitro pigment, a nitroso pigment, and aniline black. The inorganic pigment may be, for example, carbon black, titanium dioxide, silica, alumina, iron oxide, iron hydroxide, and tin oxide. The pigment is generally non-soluble in water and the organic solvent, and is present in a state dispersed in the solvent as particles. In addition, an organic or inorganic binder, a dispersing agent, a surface active agent, a pH adjuster, an antiseptic, and an antioxidant may be appropriately mixed into the ink composition 15 if necessary.

The viscosity of the ink composition 15 at 20°C is 2 to 5 cSt, and preferably 3 to 4 cSt. If the viscosity of the ink composition is less than 2 cSt, the ink composition 15 easily impregnates into the inorganic mat and the printed character may become unclear. If the viscosity of the ink composition 15 is greater than 5cSt, the ink composition 15 is likely to be clogged inside the liquid ejection head 13a. The viscosity of the ink composition 15 may be changed by mainly changing the amount and type of the solvent for dissolving dye or pigment.

The operation for forming the holding seal member 14a will now be described.

The inorganic fiber mat 14 impregnated with the binder is first mounted on the conveying table 12. The inorganic fiber mat 14 is then conveyed to a position under the liquid ejection device 13 (printing position). In this state, the inorganic fiber mat 14 is positioned in correspondence with the cut-out position S so that the holding seal members 14a expected to be cut out faces the ink ejecting position of the liquid ejection device 13.

The ink composition 15 is then ejected from the liquid ejection head 13a onto the surface of the inorganic fiber mat 14 to perform printing. Printing is performed in accordance with the identification information (e.g., ABCDE in Fig. 1) such as the character information and the like input to the control device in advance. The control device moves the conveying table 12 in the X direction and controls the ejection of the ink composition 15 from the liquid ejection head 13a. The printing process for the inorganic fiber mat 14 is controlled in this manner.

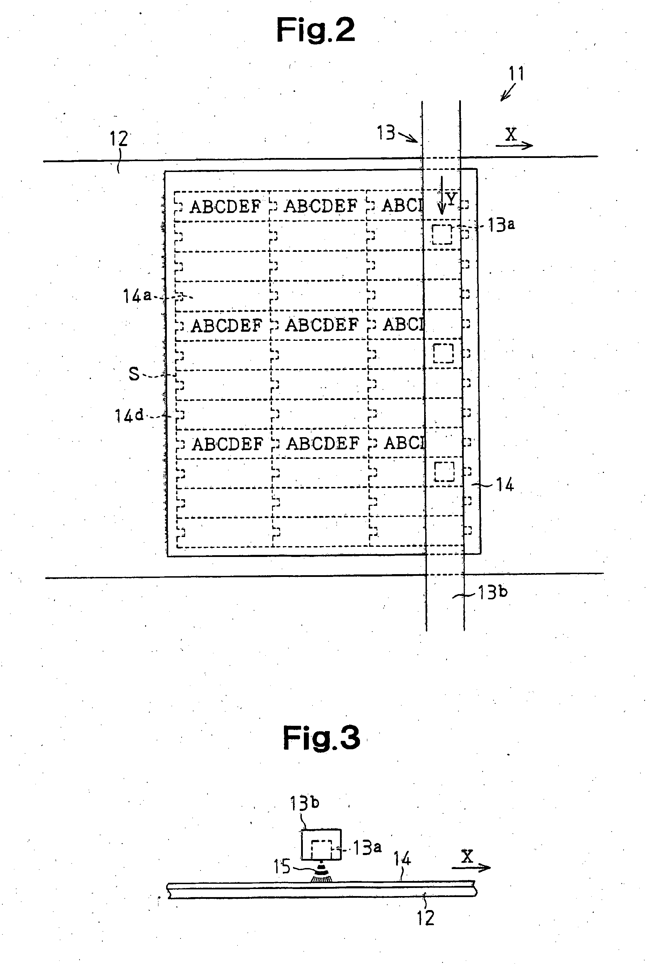

As shown in Fig. 1, printing is performed from the head holding seal members 14a in the first, fifth, and ninth rows from the top (left side with respect to conveying direction X) in the movement direction of the conveying table 12. After the printing process is performed on each of the three holding seal members 14a in the first, fifth, and ninth rows, the liquid ejection device 13 is moved in the Y direction for an amount corresponding to one row so that the head holding seal members 14a in the second, sixth, and tenth rows from the top (left side with respect to conveying direction X) is positioned immediately under the liquid ejection head 13a, as shown in the state of Fig. 2. Similar printing is subsequently performed in a repeated manner so that each holding seal member in the inorganic fiber mat 41 undergoes the printing process.

When wrapping the holding seal member 14a around the circumferential surface of the exhaust gas purifying body 21, a seal 22 may be adhered to the portion of engagement between the tongue holder 14b and the tongue 14c. The exhaust gas purifying body 21 around which the holding seal member 14a is wrapped is then press fitted into the cylindrical metal shell 23 to assemble the exhaust gas purifier.

The holding seal member 14a for the exhaust gas purifying body in the preferred embodiment has the advantages described below.
(1) The identification information is printed on the surface of the inorganic fiber mat 14 by the liquid ejection device 13. Therefore, the holding seal member may be identified by product name or manufacturing serial number. The identification information is shown on only one surface of each holding seal member. Thus, the inner and outer sides of the holding seal member are not mistaken.
(2) A greater amount of information is shown on the inorganic fiber mat 14 compared to when just spraying (marking) a colored resin paint.
(3) The characteristics of the holding seal member 14a do not change since labels and colored resin paint that may burn in the shell are not used.
(4) When the inorganic fiber mat 14 undergoes printing performed the non-contact type liquid ejection device 13, which performs printing from a position distant from the printing subject, the dimensions of the holding seal member, such as length and width, do not need to be taken into consideration as would be necessary when contact type printing is performed by a transfer roll, a transfer plate (stamper), and the like. Further, the printing characters may be easily changed. When changing the dimension of the holding seal member, the printing characters may easily be changed by changing the information of the type and size of the printing characters input to the control device, which controls the conveying speed of the conveying table 12 via the driving means and the ejection of the ink composition 15 from the liquid ejection device 13.
(5) The non-contact type printing device does not press (compress) the inorganic fiber mat 14 as would when contact type printing, such as gravure printing or relief printing is performed with a transfer roller or a stamper. Thus, the thickness and the resilience of the inorganic fiber mat 14 are not changed.
(6) In a contact type printing device, problems such as inorganic fibers adhering to the transfer roller and the transfer plate, recesses in the printing plate becoming clogged, and the printed characters becoming illegible may occurs. However, such problems do not occur when using the non-contact type printing device, and the identification information is clearly printed on the inorganic fiber mat 14. Furthermore, the used amount of ink composition is reduced.
(7) Regardless of whether the inorganic fiber mat 14 is a non-woven cloth or felt, the particles of the ink composition 15 perpendicularly enters the inorganic fiber mat 14 from the surface. Thus, the printed characters are clear when seen from above the holding seal member 14a.
(8) The organic binder is impregnated in the inorganic fiber mat to obtain a predetermined organic binder absorption ratio. Therefore, information, such as the manufacturing serial number or indication of the inner or outer side, is more clearly printed on the inorganic fiber mat 14. Further, the possibility of erroneously reading the information is reduced.
(9) The identification information is clearly printed on the inorganic fiber mat 14 when fibers having an average fiber diameter of 6 µm or greater are used.
(10) The inorganic fiber mat 14 on the conveying table 12 is positioned so that predetermined holding seal members at the cut-out position S are at the printing position of the liquid ejection device 13 immediately before printing. Therefore, printing is performed on the surface of each holding seal member that is to be cut out.

It should be apparent to those skilled in the art that the present invention may be embodied in many other specific forms without departing from the scope of the invention. Particularly, it should be understood that the present invention may be embodied in the following forms.

The color of ink composition 15 may be limited to only black. Alternatively, the color of the ink composition 15 may be cyan, magenta, yellow, and so on.

The inorganic fiber mat 14 is cut out from each holding seal member 14a after printing.

Printing is performed on the surface of the inorganic fiber mat 14 by moving the conveying table 12 in the X direction and the liquid ejection device 13 in the Y direction. However, printing may also be performed by fixing the conveying table 12 and moving only the liquid ejection device 13. Printing may also be performed by fixing the liquid ejection device 13 and moving only the conveying table 12.

The number of liquid ejection heads 13a attached to the support 13b of the liquid ejection device 13 is not particularly limited, and may be one, or two or more taking into consideration the printing efficiency and the like. The order of printing on the inorganic fiber mat 14 is appropriately set taking into consideration the printing efficiency and the like.

The number of holding seal members cut out from the inorganic fiber mat is not particularly limited and may be more than two.

The exhaust gas purifying body in which the holding seal member is used may be an exhaust gas purifying filter, which collects the PM of the diesel particulate filter (DPF) etc., or a catalyst carrier, which is formed by a ceramic filter and the like, for carrying the catalyst for purifying the exhaust gas.

The printing performed on the inorganic fiber mat 14 is not limited to the ink jet method, and may be a type printing such as gravure printing or relief printing employing a rolling transfer device that uses transfer rollers with projections formed on the surface or a pressing transfer device such as a stamper that uses a flat plate with projections formed on the surface.

The holding seal member 14a is wrapped around the entire circumferential surface of the exhaust gas purifying body 21, as shown in Fig. 4. However, the holding seal member may be wrapped around at least part of the circumferential surface of the exhaust gas purifying body.

The identification information is directly printed on the inorganic fiber mat 14 by the liquid ejection device 13.

An example of the identification information is a two dimensional code such as character, a number, a symbol, a barcode, a QR code (Quick Response Code) and the like. The content indicated by the identification information is not particularly limited, and may be a product name, a product number, a manufacturing serial number, basic weight, product type, weight, product size, vehicle type, inner or outer side distinguishing mark of the holding seal member.

The printing characters are printed on only one surface of the holding seal member. However, the position of the printing characters is not particularly limited, and the printing characters may be printed on both surfaces of the holding seal member, on only the rear surface of the holding seal member, on a side surface of the holding seal member.

### Example

Holding seal members for test examples 1 to 8 shown in table 1 were formed through the method described below and an ink absorption test and printing test were performed. The results are shown in table 1.

### <Method for manufacturing alumina silica fiber mat>

A basic aluminum chloride aqueous solution with alumina content of 75g/l and Al atom/Cl atom=1.8 was prepared. Silica sol was added to the aqueous solution to adjust the composition of the alumina fiber so that alumina:silica=72±2 : 28±2, and alumina fiber precursor was prepared. An organic polymer such as polyvinyl alcohol was added to the alumina fiber precursor and then condensed to prepare a spinning solution. Fiber spinning was performed through a blowing method using the spinning solution. The spun fiber was cut to an average fiber length of 12 mm. The fiber precursors were folded and stacked to manufacture an alumina fiber stacked sheet. Needle punching process was then performed on the alumina fiber stacked sheet at a rate of 500 locations per 100 square centimeters. The stacked sheet was then heated, and continuously baked at a maximum temperature of 1250°C to form a continuous stacked sheet of alumina fiber having a coating weight of 1160 g/square centimeter. The average diameter of the alumina fiber was 7.2 µm, and the minimum diameter was 3.2 µm. The continuous stacked sheet was then cut, the organic binders such as acrylic resins were absorbed, and the holding seal members of each test example shown in table 1 were formed.

### <Ink absorption test>

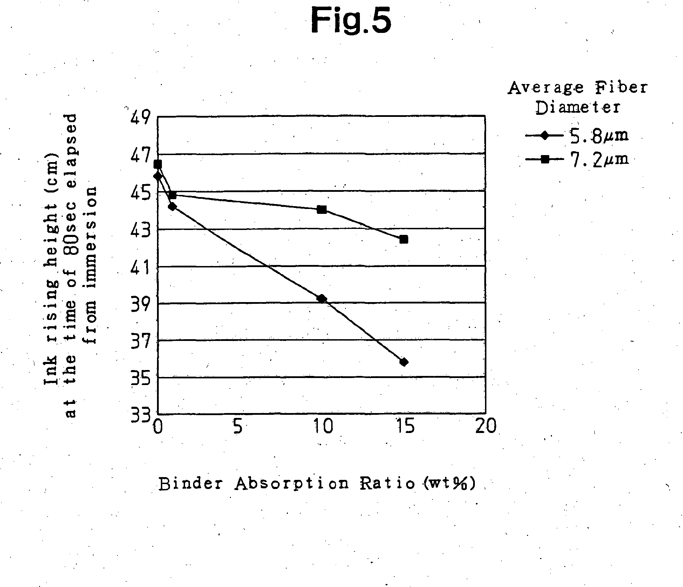

Each holding seal member was cut into a strip. While supporting one end of the strip-shaped seal member, the other end was immersed in 20ml of aqueous ink contained in a dish. The elapsed time from immersion and the rising height of the ink impregnated to the holding seal member were measured. The results are shown in table 1 and Fig. 5.

### <Print test (bleeding test)>

The characters printed on the holding seal member of each test example using the ink jet printing device were visually checked by five observers and the bleeding of the characters was observed. The rating was made in three levels, with three points for when the printed character was not bleeding, two points for when slight bleeding was recognized, and one point for when bleeding was recognized. The average points were calculated as the rating results of the five observers and categorized into "excellent" when the average point was 2.6 points or greater, "satisfactory" when 1.6 points or greater and 2.5 points or less, and "poor" when 1.5 points or less. The evaluation result for the bleeding test is shown in table 1.

### <Print test (adhesion test)>

The characters printed on the holding seal member of each test example using the ink jet printing device were visually checked by five observers and the adhesion of the ink and the fiber was observed. The rating was made at three levels with three points for when the ink was sufficiently adhered to the fiber, two points for when adhesiveness was slightly unsatisfactory, and one point for when ink was not sufficiently adhered to the fiber. The average points were calculated as the rating results of the five observers and categorized into "excellent" when the average point was 2.6 points or greater, "satisfactory" when 1.6 points or greater and 2.5 points or less, and "poor" when 1.5 points or less. The evaluation result for the adhesion test is shown in table 1.

**Table 1**

| | Organic Binder Absorption Ratio (mass%) | Average Fiber Diameter (µm) | Ink Rising Height (cm) | Bleeding | Adhesion |
|---|---|---|---|---|---|
| Test Example 1 | 0 | 5.8 | 45.8 | Poor | Excellent |
| Test Example 2 | 1 | 5.8 | 44.2 | Satisfactory | Excellent |
| Test Example 3 | 10 | 5.8 | 39.2 | Excellent | Satisfactory |
| Test Example 4 | 15 | 5.8 | 35.8 | Excellent | Poor |
| Test Example 5 | 0 | 7.2 | 46.4 | Poor | Excellent |
| Test Example 6 | 1 | 7.2 | 44.8 | Satisfactory | Excellent |
| Test Example 7 | 10 | 7.2 | 44.0 | Excellent | Excellent |
| Test Example 8 | 15 | 7.2 | 42.4 | Excellent | Satisfactory |

From the results shown in table 1, the ink rising height exceeded 45 cm when the organic binder was not impregnated. In this case, the wetness of the ink was too high for the holding seal member and the ink was impregnated in excess. As a result, the printed character was unclear. The ink rise height was less than 39 cm when the organic binder was 15% by mass (test example 4). In this case, the ink lacked in wetness and the ink did not sufficiently adhere to the fiber of the holding seal member. Thus, the printed character was unclear. In test examples 5 to 8 in which the average fiber diameter was 7.2 µm, the rising height of the ink was high compared to test examples 1 to 4 in which the average fiber diameter was 5.8 µm. The graph of Fig. 5 shows that the ink rising height was high in the test examples in which the average fiber diameter was 7.2 µm compared to the test examples in which the average fiber diameter was 5.8µm. In other words, the adhesiveness of the ink was recognized to enhance with an appropriately wide average fiber diameter. In test examples 5 to 8 in which the average fiber diameter was 7.2 µm, the adhesiveness of the ink did not greatly decrease even when the organic binder amount increased. That is, in the test examples in which the average fiber diameter was 7.2 µm, the variation in adhesiveness of the ink was less likely to occur by the organic binder amount, as shown in Fig. 5.

The present disclosure includes the structures described below.
(a) The printing apparatus for printing the identification information on the surface of the inorganic fiber holding seal member wrapped around the exhaust gas purifying body includes a liquid ejection device for printing identification information by ejecting liquid from the liquid ejection head.
(b) For the inorganic fiber mat from which the holding seal members are arranged in a plurality of columns that can be cut out, the holding seal member printing apparatus prints identification information on each column of holding seal members

With the devices of (a) and (b), the number of liquid ejection heads for ejecting liquid (ink composition) does not need to be changed even if the number of holding seal members to be cut out from one sheet of inorganic fiber mat is increased or decreased.

## Claims

1. A method for forming a plurality of sheet-like inorganic fiber holding seal members (14a) to be wrapped around an exhaust gas purifying body (21) for holding the exhaust gas purifying body (21) and preventing leakage of exhaust gas, the method comprising:
needle-punching an inorganic fiber sheet (14) and thereafter impregnating it with a binder to prepare a needle-punched and impregnated inorganic fiber sheet (14);
the method being **characterised by** further comprising the steps of:
printing identification information on a surface of the impregnated inorganic fiber sheet; and
cutting out a plurality of holding seal members from the inorganic fiber sheet (14),
wherein the identification information is printed by a printer (13) on each holding seal member before the holding seal members are cut out from the inorganic fiber sheet.

2. The method according to claim 1, wherein the printer is a device selected from the group consisting of a noncontact type printing device including a liquid ejection head (13a) for ejecting liquid, a transfer roller device, and a flat plate type pressing transfer device.

3. The method according to claim 1 or 2, wherein the binder is at least either one of an organic binder and an inorganic binder.

4. The method according to claim 3, wherein the amount of the organic binder impregnated in the holding seal member is 1 to 10% by mass with respect to the mass of the holding seal member.

5. The method according to claim 1 or 2, wherein the inorganic fiber has an average fiber diameter of 6 µm or greater.

6. The method according to claim 1 or 2, wherein the holding seal member is formed from an alumina-silica fiber sheet.

7. The method according to claim 1 or 2, wherein the identification information is at least one of a product name, a product number, a manufacturing serial number, basic weight, product class, weight, product size, vehicle type information, and inner or outer side distinguishing mark of the holding seal member.

8. A method for forming an exhaust gas purifier, the method comprising:
forming a sheet-like inorganic fiber holding seal member (14a) using the method according to any one of claims 1 to 7;
thereafter wrapping the holding seal member around at least part of the circumferential surface of an exhaust gas purifying body (21); and
accommodating the seal member and the exhaust gas purifying body in a tubular shell (23).

9. The method according to claim 8, wherein the exhaust gas purifying body is a catalyst carrier carrying a catalyst for purifying exhaust gas or an exhaust gas purifying filter.

## Patentansprüche

1. Verfahren zum Ausbilden mehrerer bogenartiger Haltedichtungselemente aus anorganischen Fasern (14a), die um einen Abgasreinigungskörper (21) zum Halten des Abgasreinigungskörpers (21) und zum Verhindern von Leckage von Abgas, gewickelt werden, wobei das Verfahren aufweist:
Nadeln eines Bogens aus anorganischen Fasern (14) und danach Imprägnieren davon mit einem Binder, um einen genadelten und imprägnierten Bogen aus anorganischen Fasern (14) herzustellen;
wobei das Verfahren **dadurch gekennzeichnet ist, dass** es ferner die Schritte aufweist:
Aufdrucken einer Identifikationsinformation auf eine Fläche des imprägnierten Bogens aus anorganischen Fasern; und
Ausschneiden mehrerer Haltedichtungselemente aus dem Bogen aus anorganischen Fasern (14),
wobei die Identifikationsinformation durch einen Drucker (13) auf jedes Haltedichtungselement gedruckt wird bevor die Haltedichtungselemente aus dem Bogen aus anorganischen Fasern ausgeschnitten werden.

2. Verfahren nach Anspruch 1, wobei
der Drucker eine Einrichtung, ausgewählt aus der Gruppe bestehend aus einer Nicht-Kontakttyp-Druckeinrichtung mit einem Flüssigkeitsausstoßkopf (13a) zum Ausstoßen von Flüssigkeit, einer Übertragungsrolleneinrichtung und einer Pressübertragungseinrichtung eines Flachplattentyps, ist.

3. Verfahren nach Anspruch 1 oder 2, wobei
der Binder zumindest ein organischer Binder und/oder ein anorganischer Binder ist.

4. Verfahren nach Anspruch 3, wobei
die Menge des organischen Binders mit der das Haltedichtungselement imprägniert ist, 1 bis 10 Massen-% bezogen auf die Masse des Haltedichtungselements beträgt.

5. Verfahren nach Anspruch 1 oder 2, wobei
die anorganische Faser einen mittleren Faserdurchmesser von 6 µm oder größer, aufweist .

6. Verfahren nach Anspruch 1 oder 2, wobei
das Haltedichtungselement aus einem Aluminiumoxid-Siliziumdioxid-Faserbogen ausgebildet ist.

7. Verfahren nach Anspruch 1 oder 2, wobei
die Identifikationsinformation zumindest eine aus einem Produktnamen, einer Produktnummer, einer Herstellungsseriennummer, einem Grundgewicht, einer Produktklasse, einem Gewicht, einer Produktgröße, einer Fahrzeugtypinformation und eines innen- oder außenseitigen Kennzeichens des Haltedichtungselements, ist.

8. Verfahren zum Ausbilden eines Abgasreinigers, wobei das Verfahren aufweist:
Ausbilden eines bogenartigen Haltedichtungselements aus anorganischen Fasern (14a) mit dem Verfahren nach einem der Ansprüche 1 bis 7;
danach Wickeln des Haltedichtungselements um zumindest einen Teil der Umfangsfläche eines Abgasreinigungskörpers (21) ; und
Aufnehmen des Dichtungselements und des Abgasreinigungskörpers in eine röhrenförmige Hülle (23).

9. Verfahren nach Anspruch 8, wobei
der Abgasreinigungskörper ein Katalysatorträger ist, der einen Katalysator zur Reinigung von Abgas oder einen Abgasreinigungsfilter trägt.

## Revendications

1. Procédé de formation d'une pluralité d'éléments de retenue et d'étanchéité en fibres inorganiques en forme de feuille (14a) à enrouler autour d'un corps de purification de gaz d'échappement (21) pour maintenir le corps de purification de gaz d'échappement (21) et pour empêcher une fuite de gaz d'échappement, le procédé comprenant le fait :
d'aiguilleter une feuille en fibres inorganiques (14) et de l'imprégner par la suite avec un liant pour préparer une feuille en fibres inorganiques aiguilletée et imprégnée (14) ;
le procédé étant **caractérisé en ce qu'**il comprend en outre les étapes consistant :
à imprimer une information d'identification sur une surface de la feuille en fibres inorganiques imprégnée ; et
à découper une pluralité d'éléments de retenue et d'étanchéité à partir de la feuille en fibres inorganiques (14),
dans lequel l'information d'identification est imprimée par une imprimante (13) sur chaque élément de retenue et d'étanchéité avant que les éléments de retenue et d'étanchéité ne soient découpés de la feuille en fibres inorganiques.

2. Procédé selon la revendication 1, dans lequel l'imprimante est un dispositif sélectionné parmi le groupe se composant d'un dispositif d'impression du type sans contact incluant une tête d'éjection de liquide (13a) pour éjecter du liquide, un dispositif à rouleau de transfert, et un dispositif de transfert par pression du type à plaques plates.

3. Procédé selon la revendication 1 ou 2, dans lequel le liant est au moins l'un ou l'autre d'un liant organique et d'un liant inorganique.

4. Procédé selon la revendication 3, dans lequel la quantité du liant organique imprégné dans l'élément de retenue et d'étanchéité est de 1 à 10% par masse par rapport à la masse de l'élément de retenue et d'étanchéité.

5. Procédé selon la revendication 1 ou 2, dans lequel la fibre inorganique a un diamètre de fibre moyen de 6 µm ou plus.

6. Procédé selon la revendication 1 ou 2, dans lequel l'élément de retenue et d'étanchéité est formé d'une feuille en fibre de silice-alumine.

7. Procédé selon la revendication 1 ou 2, dans lequel l'information d'identification est au moins l'un(e) d'un nom de produit, d'un numéro de produit, d'un numéro de série de fabrication, d'un grammage, d'une classe de produit, d'un poids, d'une taille de produit, d'une information concernant le type de véhicule, et d'une marque distinctive du côté interne ou externe de l'élément de retenue et d'étanchéité.

8. Procédé de formation d'un purificateur de gaz d'échappement, le procédé comprenant le fait :
de former un élément de retenue et d'étanchéité en fibres inorganiques en forme de feuille (14a) en utilisant le procédé selon l'une quelconque des revendications 1 à 7 ;
d'enrouler par la suite l'élément de retenue et d'étanchéité autour d'au moins une partie de la surface circonférentielle d'un corps de purification de gaz d'échappement (21) ; et
de recevoir l'élément d'étanchéité et le corps de purification de gaz d'échappement dans une enveloppe tubulaire (23).

9. Procédé selon la revendication 8, dans lequel le corps de purification de gaz d'échappement est un support de catalyseur portant un catalyseur pour purifier le gaz d'échappement ou un filtre de purification de gaz d'échappement.
